# EUROPEAN PATENT SPECIFICATION

(11) **EP 3 363 700 B1**
(45) Date of publication and mention of the grant of the patent: **26.05.2021**
(21) Application number: 18157148.0
(22) Date of filing: 16.02.2018
(51) Int. Cl.: B60T 8/36, B60T 8/32, B60T 13/68, B60T 8/17, B60T 17/04

(54) **BASE OF BRAKE FLUID PRESSURE CONTROL DEVICE FOR VEHICLE AND BRAKE FLUID PRESSURE CONTROL DEVICE FOR VEHICLE**
TRÄGERPLATTE EINER BREMSFLÜSSIGKEITSDRUCKREGELUNGSVORRICHTUNG FÜR FAHRZEUG UND BREMSFLÜSSIGKEITSDRUCKREGELUNGSVORRICHTUNG FÜR FAHRZEUG
BASE DE DISPOSITIF DE COMMANDE DE PRESSION DE FLUIDE DE FREIN POUR VÉHICULE ET DISPOSITIF DE COMMANDE DE PRESSION DE FLUIDE DE FREIN POUR VÉHICULE

(30) Priority: 17.02.2017 JP 2017028506
(43) Date of publication of application: 22.08.2018
(73) Proprietor: Hitachi Astemo, Ltd., Hitachinaka-shi, Ibaraki 312-8503 (JP)
(72) Inventor: Kodama, Takuro, Ibaraki 312-8503 (JP)
(74) Representative: Hoffmann Eitle

(56) References cited:
- EP-A1- 2 311 697
- EP-A2- 1 746 001
- EP-A2- 1 839 982
- WO-A1-2015/016302
- WO-A1-2016/009968
- JP-A- 2009 006 854
- US-A1- 2011 062 773

## Description

### TECHNICAL FIELD

The present invention relates to a base of a brake fluid pressure control device for a vehicle, and a brake fluid pressure control device for a vehicle including the base.

### BACKGROUND ART

As a brake fluid pressure control device, for example, there is a technology disclosed in Japanese Patent No. 5724941. In a brake fluid pressure control device disclosed in Japanese Patent No. 5724941, on one face of a base having a substantially rectangular shape, a wheel cylinder port and a mounting seat surface for a brake line are formed.

In such a configuration like the technology disclosed in Japanese Patent No. 5724941, since it is required to secure the mounting seat surface, it is difficult to reduce the weight of the base.

By the way, as brake line connection structures, for example, a flare type using a flare pipe and a banjo type using a banjo are known, and a configuration coping with various brake line connection structures is desired.

WO 2015/016302 A1 discloses a base of a brake fluid pressure control device for a vehicle according to the preamble of claim 1.

Similar brake fluid pressure control devices are also known from JP 2009 006854 A, EP 2 311 697 A1 and US 2011/062773 A1.

WO 2016/009968 A1, EP 1 839 982 A2 and EP 1 746 001 A2 also form part of the prior art.

### SUMMARY

An object of the present invention is to provide a base of a brake fluid pressure control device for a vehicle, and a brake fluid pressure control device for a vehicle including the base, which cope with various brake line connection structures and the size of which is reduced.

The invention relating to a first aspect is a base of a brake fluid pressure control device for a vehicle, the base including a brake fluid passage formed therein. In one face, an insertion hole in which a brake line is to be inserted is formed, and on at least one of perpendicular faces perpendicular to the one face, a protruding part is formed so as to protrude outward from the corresponding perpendicular face In the invention relating to the first aspect, a part of a mounting seat surface for the brake line is formed on the protruding part and the protruding part has a flange shape or an eave shape.

The invention relating to a second aspect is a brake fluid pressure control device for a vehicle, which includes the aforementioned base and a housing mounted on the base.

The invention relating to a third aspect is the brake fluid pressure control device according to the second aspect, wherein the perpendicular face on which the protruding part is formed is a face where the housing is mounted.

The invention relating to a fourth aspect is the brake fluid pressure control device according to any one of the second aspect and the third aspect, wherein the perpendicular face on which the protruding part is formed is a face where a motor is mounted.

The invention relating to a fifth aspect is the brake fluid pressure control device according to any one of the second aspect to the fourth aspect, wherein the perpendicular face on which the protruding part is formed is a face where a pump storage hole is formed.

The invention relating to a sixth aspect is the brake fluid pressure control device according to the third aspect, wherein a base mounting part of the housing is formed in a shape having a rounded corner, and the protruding part is formed at a position corresponding to the corner of the housing, on the perpendicular face of the base.

According to the first aspect of the invention, on the base, the protruding part is formed, and the part of the mounting seat surface for the brake line is formed on the protruding part. Therefore, it is possible to reduce the weight of the base while coping with various brake line connection structures.

Also, according to the second aspect of the invention, on the base, the protruding part is formed, and the part of the mounting seat surface for the brake line is formed on the protruding part. Therefore, it is possible to reduce the weight of the base while coping with various brake line connection structures.

Also, according to the first aspect of the invention, the part of the mounting seat surface for the brake line is formed on the protruding part protruding from the base. Therefore, it is possible to secure the mounting seat surface for the brake lines (for example, a banjo type) without uselessly increasing the size of the base.

According to the third aspect of the invention, it is possible to effectively use empty space on the housing mounting surface to suitably provide the protruding part.

According to the fourth aspect of the invention, it is possible to effectively use empty space on the motor mounting surface to suitably provide the protruding part.

According to the fifth aspect of the invention, it is possible to reduce the weight of the base while coping with various brake line connection structures.

According to the sixth aspect of the invention, the corner of the base mounting part of the housing is rounded, and the protruding part is formed in empty space. Therefore, it is possible to reduce the weight of the base, thereby reducing the weight of the whole of a product, i.e. the brake fluid pressure control device for a vehicle.

### BRIEF DESCRIPTION OF THE DRAWINGS

FIG. 1 is a base configuration diagram of a brake fluid pressure control device for a vehicle capable of handling two systems according to the present invention.
FIG. 2 is a perspective view of the brake fluid pressure control device for a vehicle capable of handling two systems.
FIGs. 3A and 3B are perspective views of the brake fluid pressure control device for a vehicle.
FIGs. 4A and 4B are views for explaining an insertion hole, a mounting seat surface, and a protruding part, and Fig. 4C is a perspective view of a banjo fitting.
FIG. 5 is a perspective view of the brake fluid pressure control device for a vehicle which includes a recess having a substantially triangular shape and which includes banjo fittings mounted thereon.
FIG. 6 is a base configuration diagram of a brake fluid pressure control device for a vehicle capable of handling one system according to the present invention.
FIG. 7 is a front view and a cross-sectional view of a main part of the brake fluid pressure control device for a vehicle capable of handling one system.
FIG. 8 is a perspective view for explaining a connection structure of a flare type.

### DETAILED DESCRIPTION

Embodiments of the present invention will be described below on the basis of the accompanying drawings. By the way, the drawings should be viewed in the direction of reference symbols.

Also, a control device for controlling the fluid pressures of a front-wheel brake and a rear-wheel brake will be referred to as a brake fluid pressure control device for a vehicle capable of handling two systems, and a control device for controlling the fluid pressure of one of a front-wheel brake and a rear-wheel brake will be referred to as a brake fluid pressure control device for a vehicle capable of handling one system.

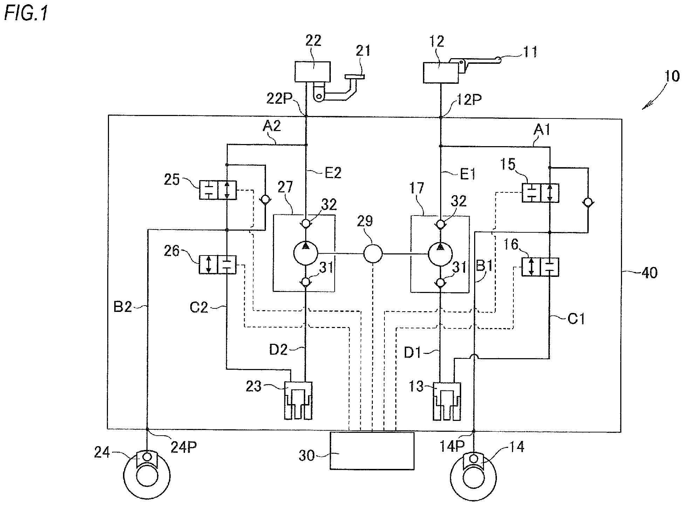

As shown in FIG. 1, a brake fluid pressure control device 10 for a vehicle capable of handling two systems includes: a first master cylinder 12 which pressurizes a hydraulic fluid in response to an operation on a brake lever, thereby producing a fluid pressure; a first reservoir 13 which temporarily stores the hydraulic fluid released from a front-wheel brake caliper 14; a first inlet control valve 15 and a first outlet control valve 16 which are assembling components that are installed between the first master cylinder 12 and the front-wheel brake caliper 14, the first inlet control valve 15 which is a normally open type electromagnetic valve, the first outlet control valve 16 which is a normally closed type electromagnetic valve; a first pump 17 which is an assembling component that is sucks the hydraulic fluid stored in the first reservoir 13 and returns the hydraulic fluid toward the first master cylinder 12; a second master cylinder 22 which pressurizes the hydraulic fluid in response to an operation on a brake pedal 21, thereby producing a fluid pressure; a second reservoir 23 which temporarily stores the hydraulic fluid released from a rear-wheel brake caliper 24; a second inlet control valve 25 and a second outlet control valve 26 which are assembling components installed between the second master cylinder 22 and the rear-wheel brake caliper 24, the second inlet control valve 25 which is a normally open type electromagnetic valve, the second outlet control valve 26 which is a normally closed type electromagnetic valve; a second pump 27 which is an assembling component that sucks the hydraulic fluid stored in the second reservoir 23 and returns the hydraulic fluid toward the second master cylinder 22; a motor 29 which drives the first and second pumps 17 and 27; a control device 30 which performs driving control on the motor 29 and opening and closing control on the first and second inlet control valves 15 and 25 and the first and second outlet control valves 16 and 26; and brake fluid passages A1, B1, C1, D1, and E1 of a first system and brake fluid passages A2, B2, C2, D2, and E2 of a second system which are provided in a base 40 and flow a brake fluid.

Here, the brake fluid passage A1 is a fluid passage extending from an inlet port 12P to the first inlet control valve 15, and the brake fluid passage B1 is a fluid pressure extending from the first inlet control valve 15 to an outlet port 14P. Also, the brake fluid passage C1 is a fluid passage extending from the brake fluid passage B1 to the first reservoir 13, and the brake fluid passage D1 is a fluid passage extending from the first reservoir 13 to the first pump 17. Further, the brake fluid passage E1 is a fluid passage extending from the first pump 17 to the brake fluid passage A1. With respect to the brake fluid passages A2, B2, C2, D2, and E2, since a description will be a duplicate, a description will not be made.

Suction valves 31 are installed on the suction sides of the first and second pumps 17 and 27, respectively, and discharge valves 32 are installed on the discharge sides of the first and second pumps 17 and 27, respectively.

Also, the base 40 includes the inlet port 12P to which a fluid passage (a brake line) extending from the first master cylinder 12 is connected, an inlet port 22P to which a fluid passage (a brake line) extending from the second master cylinder 22 is connected, the outlet port 14P to which a fluid passage (a brake line) extending to the front-wheel brake caliper 14 is connected, and an outlet port 24P to which a fluid passage (a brake line) extending to the rear-wheel brake caliper 24 is connected.

Now, the operation of the brake fluid pressure control device 10 for a vehicle will be described. However, since the first system from the brake pedal 21 to the front-wheel brake caliper 14 and the second system from the brake pedal 21 to the rear-wheel brake caliper 24 are the same in the operation, only the first system will be described.

### • State where ABS is not operated

When it is not required to lock a front wheel, the control device 30 stops the first pump 17, and opens the first inlet control valve 15, and closes the first outlet control valve 16. In this state, if the brake lever 11 is operated to the braking side, the fluid pressure is increased by the first master cylinder 12, and this fluid pressure is transmitted to the front-wheel brake caliper 14 via the first inlet control valve 15.

### • ABS (Depressurization Mode)

If it is nearly required to lock the front wheel, the control device 30 closes the first inlet control valve 15, and opens the first outlet control valve 16. The fluid pressure in the front-wheel brake caliper 14 is released to the first reservoir 13 via the first outlet control valve 16. By this, the brake fluid pressure of the front-wheel brake caliper 14 is decreased.

### • ABS (Hold Mode)

The control device 30 closes both of the first inlet control valve 15 and the first outlet control valve 16. By this, the brake fluid pressure of the front-wheel brake caliper 14 is held constantly.

### • ABS (Pressurization Mode)

When increasing the brake fluid pressure, the control device 30 opens the first inlet control valve 15, and closes the first outlet control valve 16. By this, the fluid pressure produced by the master cylinder 12 is transmitted to the front-wheel brake caliper 14. By this, the brake fluid pressure of the front-wheel brake caliper 14 is increased.

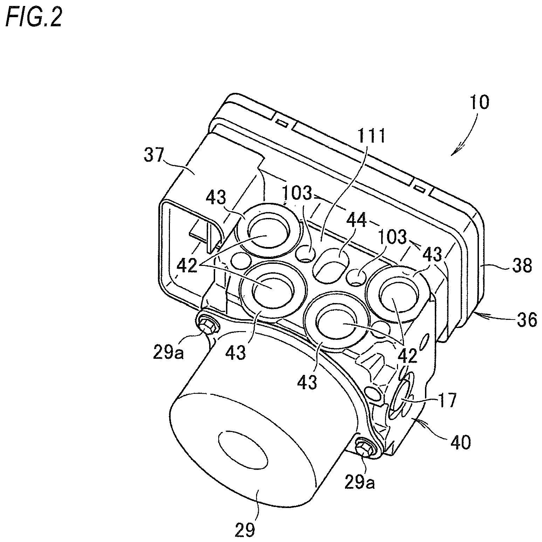

As shown in FIG. 2, the brake fluid pressure control device 10 for a vehicle includes the base 40 having a block shape, a housing 36 mounted on the base 40, and the motor 29 mounted on the base 40. An opening of the housing 36 is covered with a cover 38.

In one face (a first face 111) of the base 40, insertion holes 42 and mounting seat surfaces 43 in which the brake lines are inserted are formed at parts corresponding to the inlet ports 12P and 22P and the outlet ports 14P and 24P described with FIG. 1, and an oval recess 44 is formed at a substantially central part.

Also, in the one face of the base 40, holes 103 connected to the brake fluid passages are formed, and the holes 103 are sealed with sealing members.

Also, the motor 29 is fixed to the base 40 with a plurality of screws 29a, and the housing 36 integrally has a connector part 37 extending along the base 40.

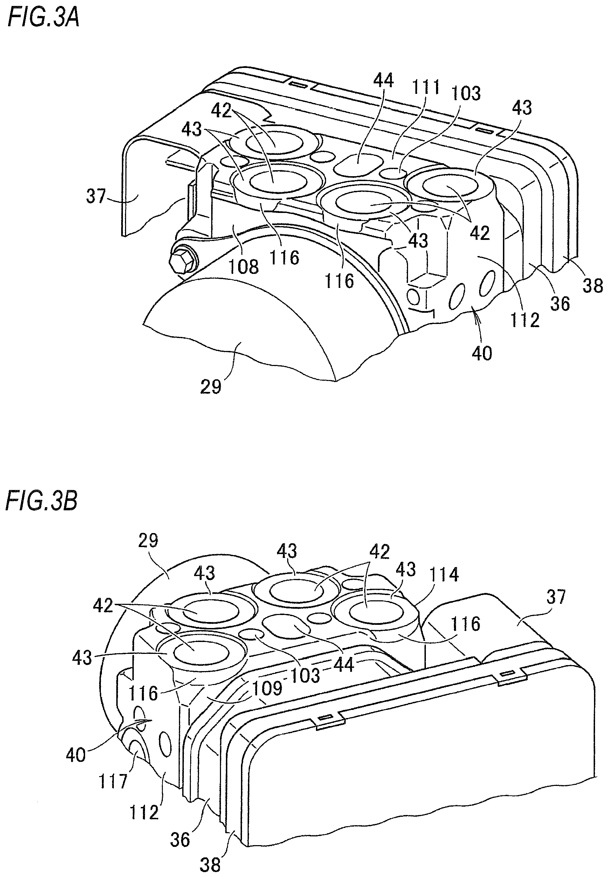

FIG. 3A is an enlarged view of a main part as seen from the motor 29 side, and FIG. 3B is an enlarged view of the main part as seen from the housing 36 side.

As shown in FIG. 3B, another perpendicular face perpendicular to the first face 111 (in this example, a housing mounting surface 109) includes protruding parts 116 and 116 protruding outward from the perpendicular face. A detailed description of FIGs. 3A and 3B will be made below.

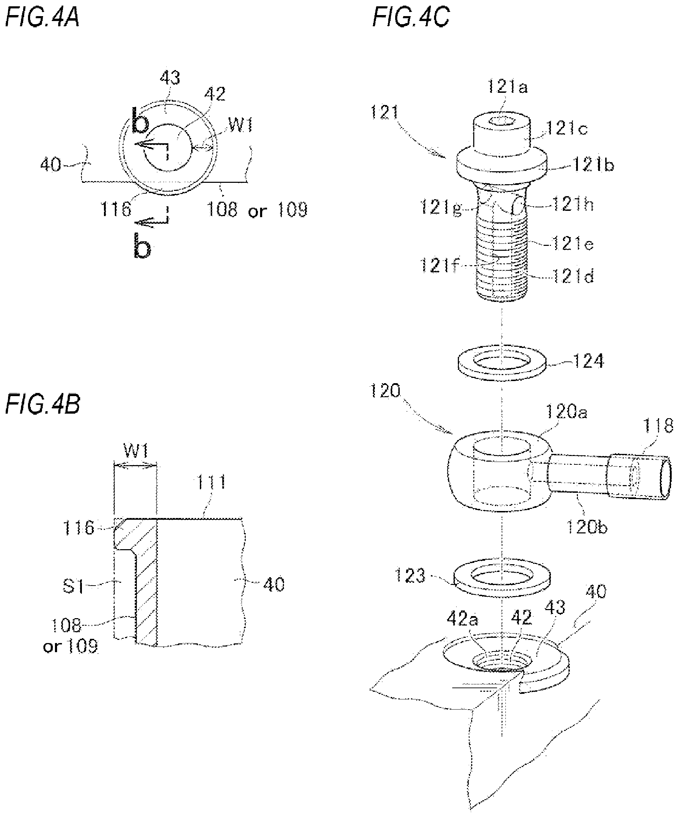

The formation purpose of the protruding parts 116 will be described on the basis of FIGs. 4A to 4C.

FIG. 4B is a cross-sectional view taken along a line b-b of FIG. 4A.

As shown in FIG. 4A, due to the protruding part 116, a seal width W1 is ensured over the circumference of 360 degrees, whereby good sealing performance is maintained.

As shown in FIG. 4B, since the protruding part 116 has a flange shape or an eave shape, as compared to the case where the whole of a motor mounting surface 108 or the housing mounting surface 109 protrudes, a portion S1 shown in FIG. 4B can be thinned, and due to the thinned portion, it is possible to reduce the weight of the base 40.

Next, on the basis of FIG. 4C, the configuration of a banjo fitting 120 will be described.

As shown in FIG. 4C, the banjo fitting 120 is attached to a leading end of a brake line 118. The banjo fitting 120 is composed of a cylindrical part 120a and a pipe part 120b which extends from the cylindrical part 120a and is inserted into the brake line 118.

The banjo fitting 120 is used as a set with a banjo bolt 121 which pierces through the cylindrical part 120a.

The banjo bolt 121 is composed of a head part 121c including a hexagonal hole 121a and a flange 121b, and a shaft part 121e extending from the head part 121c and including a male screw part 121d.

A shaft center hole 121f is formed in the shaft part 121e, and an annular groove 121g is formed in a part of the shaft part 121e close to the flange 121b (a part which does not interfere with the male screw part 121d). A through-hole 121h is formed from the annular groove 121g to the shaft center hole 121f.

In the base 40, the insertion hole 42 corresponding to the brake line 118, and the mounting seat surface 43 are formed. At an opening end of the insertion hole 42, a female screw part 42a is formed.

On the mounting seat surface 43, a washer 123 is mounted as a lower seal member, and on the washer 123, the cylindrical part 120a of the banjo bolt 121 is mounted, and on the cylindrical part 120a, a washer 124 is mounted as an upper seal member.

Next, the shaft part 121e of the banjo bolt 121 is inserted through the washer 124, the cylindrical part 120a, and the washer 123, and the male screw part 121d is screwed into the female screw part 42a. Since the washer 124 is pressed by the flange 121b, and the washer 123 is pressed by the cylindrical part 120a, they exert a sealing effect together.

The brake fluid supplied from the brake line 118 flows in the pipe part 120b of the banjo fitting 120, and the annular groove 121g, the through-hole 121h, and the shaft center hole 121f of the banjo bolt 121 in this order, and reaches the brake fluid passage inside the base 40.

Since the annular groove 121g is formed, regardless of the orientation of the cylindrical part 120a, the flow of the brake fluid is ensured.

In other words, as shown in FIGs. 3A and 3B, the protruding parts 116 are formed in the base 40, and parts of the mounting seat surfaces 43 for the brake lines are formed on the protruding parts 116. Therefore, it is possible to reduce the weight of the base 40 while securing the mounting seat surfaces 43 for the brake lines.

Specifically, as shown in FIG. 3A, the protruding parts 116 are formed on the motor mounting surface 108. Therefore, it is possible to effectively use empty space of the motor mounting surface 108.

Also, as shown in FIG. 3B, the protruding parts 116 are formed on the housing mounting surface 109. Therefore, it is possible to effectively use empty space of the housing mounting surface 109.

Further, on a fourth face 114 which is one of the other perpendicular faces, the protruding part 116 may be formed. By this, it is possible to effectively use empty space of the fourth face 114.

Also, on a second face 112 which is one of the other perpendicular faces, the protruding part 116 may be formed. By this, it is possible to effectively use empty space of the second face 112. The second face 112 and the fourth face 114 are faces where a pump storage hole 117 is formed. By this, it is possible to effectively use empty space of the face where the pump storage hole 117 is formed.

Further, as shown in FIG. 3B, with respect to the rectangular base 40, the housing 36 is formed in a shape having rounded corners, and on the housing mounting surface 109 of the base 40, at positions corresponding to the corners of the housing 36, the protruding parts 116 and 116 are provided. Therefore, it is possible to reduce the weight of the base 40, and thus it is possible to reduce the weight of the whole of the brake fluid pressure control device 10 for a vehicle.

Hereinafter, a second example will be described.

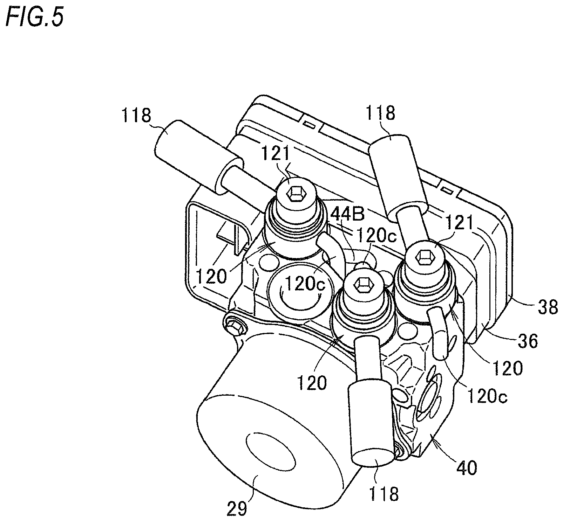

As shown in FIG. 5, in the second example, in one face of a base 40, a substantially triangular recess 44B is formed. Also, banjo fittings 120 include leading end parts 120c having an L or J shape and extending from cylindrical parts 120a.

Further, when brake lines 118 are connected to the base 40, two of the three leading end parts 120c are fit in the recess 40B. Since banjo bolts 121 are tightened by clockwise turning, when the two leading end parts 120c come into contact with a wall of the recess 40B, turning is stopped. The other one leading end part 120c comes into contact with an appropriate part of the base 40.

Also, the recess 40B may be configured to double as a clamp hole.

In other words, in the base 40 of the brake fluid pressure control device 10 for a vehicle including brake fluid passages A1 to E1 and A2 to E2 formed therein, if insertion holes 42 (see FIG. 3A) for connecting the brake lines 118 are formed in one face, and the common recess 40B to which the leading end parts 120c of the plurality of brake lines 118 are inserted is formed, such that turning of the plurality of brake lines 118 is stopped by the recess 40B, it is possible to minimize man-hours for processing to stop turning of the plurality of brake lines 118.

Also, although the formation position of the recess 44B is arbitrary, if the recess 44B is formed at a position surrounded by a plurality of insertion holes 42 like the example, it is possible to dispose the recess 40B with good balance with respect to the insertion holes 42.

Until now, the brake fluid pressure control device 10 for a vehicle capable of handling two systems for controlling the front-wheel brake caliper (the reference symbol "14" in FIG. 1) and the rear-wheel brake caliper (the reference symbol "24" in FIG. 1) has been described.

Next, as a third example, a brake control device 10B for a vehicle capable of handling one system will be described.

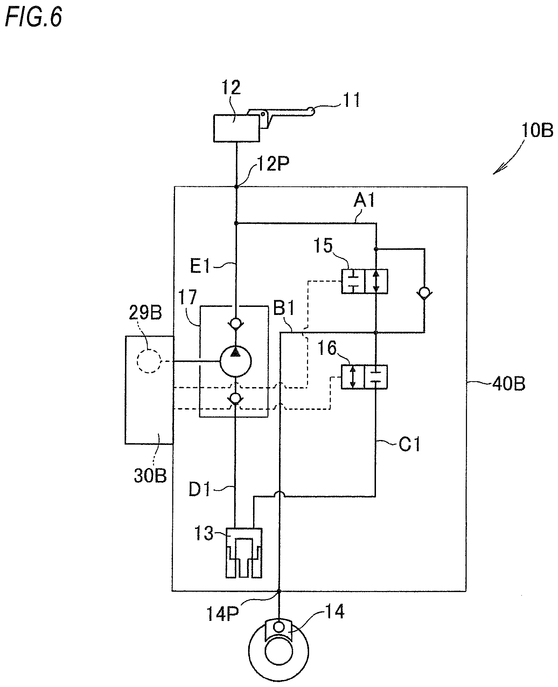

As shown in FIG. 6, the brake fluid pressure control device 10B for a vehicle includes: a master cylinder 12 which pressurizes a hydraulic fluid in response to an operation on a brake lever 11, thereby producing a fluid pressure; a reservoir 13 which temporarily stores the hydraulic fluid released from a front-wheel brake caliper 14; an inlet control valve 15 and an outlet control valve 16 which are installed between the master cylinder 12 and the front-wheel brake caliper 14, the inlet control valve 15 which is a normally open type electromagnetic valve, the outlet control valve 16 which is a normally closed type electromagnetic valve; a pump 17 which sucks the hydraulic fluid stored in the reservoir 13 and returns the hydraulic fluid toward the master cylinder 12; a motor 29B which drives the pump 17; a control device 30B which performs driving control on the motor 29B and opening and closing control on the inlet control valve 15 and the outlet control valve 16; and brake fluid passages A1, B1, C1, D1, and E1 which are provided in a base 40B and flow a brake fluid.

Here, the brake fluid passage A1 is a fluid passage extending from an inlet port 12P to the inlet control valve 15, and the brake fluid passage B1 is a fluid pressure extending from the inlet control valve 15 to an outlet port 14P. Also, the brake fluid passage C1 is a fluid passage extending from the brake fluid passage B1 to the reservoir 13, and the brake fluid passage D1 is a fluid passage extending from the reservoir 13 to the pump 17. Further, the brake fluid passage E1 is a fluid passage extending from the pump 17 to the brake fluid passage A1.

Now, the operation of the brake fluid pressure control device 10B for a vehicle will be described.

### • State where ABS is not operated

When it is not required to lock front wheels, the control device 30B stops the first pump 17, and opens the inlet control valve 15, and closes the outlet control valve 16. In this state, if the brake lever 11 is operated to the braking side, the fluid pressure is increased by the master cylinder 12, and this fluid pressure is transmitted to the front-wheel brake caliper 14 via the inlet control valve 15.

### • ABS (Depressurization Mode)

If it is nearly required to lock the front wheels, the control device 30B closes the inlet control valve 15, and opens the outlet control valve 16. The fluid pressure in the front-wheel brake caliper 14 is released to the reservoir 13 via the outlet control valve 16. By this, the brake fluid pressure of the front-wheel brake caliper 14 is reduced.

### • ABS (Hold Mode)

The control device 30B closes both of the inlet control valve 15 and the outlet control valve 16. By this, the brake fluid pressure of the front-wheel brake caliper 14 is held constantly.

### • ABS (Pressurization Mode)

When increasing the brake fluid pressure, the control device 30B opens the inlet control valve 15, and closes the outlet control valve 16. By this, the fluid pressure produced by the master cylinder 12 is transmitted to the front-wheel brake caliper 14. By this, the brake fluid pressure of the front-wheel brake caliper 14 is increased.

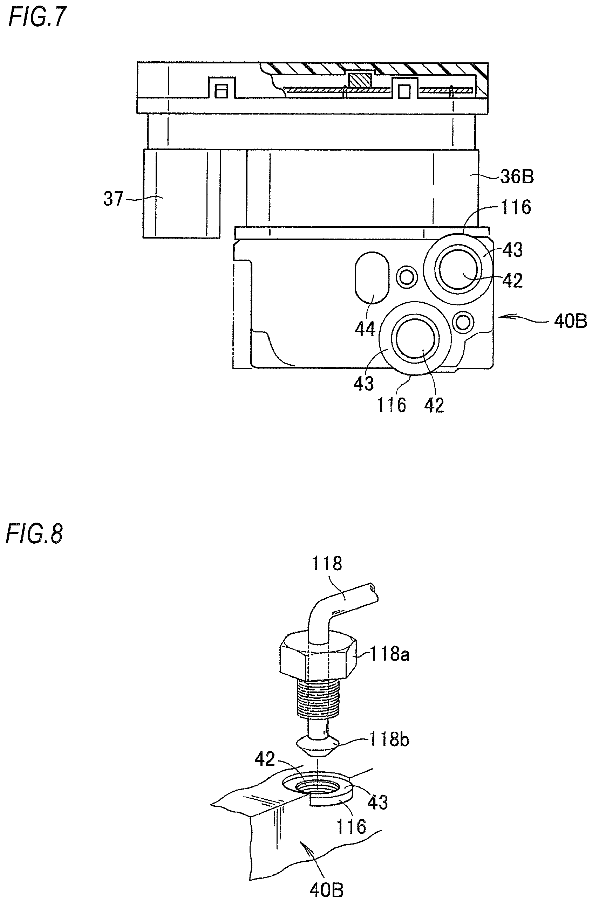

As shown in FIG. 7, in the brake fluid pressure control device 10B for a vehicle including the base 40B and the housing 36B which is mounted on one face of the base 40B, the base 40B includes the insertion holes 42, the mounting seat surfaces 43, and the protruding parts 116. Therefore, the protruding parts 116 can be formed even in the base 40B capable of handling one system.

Further, the cross-sectional shape of the protruding parts 116 is the same as that of the first example (FIG. 4B). Therefore, a detailed description thereof will not be made.

Hereinafter, a fourth example will be described. The fourth example is a connection structure of a flare type brake line.

As shown in FIG. 8, a nut 118a is turnably fit on a brake line 118. Then, on the leading end side from the nut 118a, a leading end part of the brake line 118 is formed as a flared part 118b. The flared part 118b is inserted into an insertion hole 42, and the nut 118a is screwed, whereby the flared part 118b can be fixed in the insertion hole 42, and the brake line 118 can be connected to the insertion hole 42. At this time, a protruding part 116 protrudes from one face of the base 40B, and a part of a mounting seat surface 43 is formed on the protruding part 116. Therefore, it is possible to more reliably mount the nut 118a on the insertion hole 42.

Further, the present invention is suitable for a motorcycle, however, it can also be applied to a tricycle, and can be applied to a general vehicle as well.

## Claims

1. A base (40) of a brake fluid pressure control device (10) for a vehicle, the base (40) including a brake fluid passage (A1-E1, A2-E2) formed therein,
wherein in one face (111), an insertion hole (42) in which a brake line (118) is to be inserted is formed, and
on at least one of perpendicular faces (108, 109, 112, 114) perpendicular to the one face (111), a protruding part (116) is formed so as to protrude outward from the corresponding perpendicular face (108, 109, 112, 114),
wherein a part of a mounting seat surface (43) for the brake line (118) is formed on the protruding part (116),
**characterized in that**
the protruding part (116) has a flange shape or an eave shape.

2. A brake fluid pressure control device (10) for a vehicle, which includes a base (40) as recited in claim 1 and a housing (36) mounted on the base (40).

3. The brake fluid pressure control device (10) according to claim 2, **characterized in that** the perpendicular face on which the protruding part (116) is formed is a face (109) where the housing (36) is mounted.

4. The brake fluid pressure control device (10) according to any one of claims 2 and 3, **characterized in that** the perpendicular face on which the protruding part (116) is formed is a face (108) where a motor (29) is mounted.

5. The brake fluid pressure control device (10) according to any one of claims 2 to 4, **characterized in that** the perpendicular face on which the protruding part (116) is formed is a face (112, 114) where a pump storage hole (117) is formed.

6. The brake fluid pressure control device (10) according to claim 3, **characterized in that**
a base mounting part of the housing (36) is formed in a shape having a rounded corner, and
the protruding part (116) is formed at a position corresponding to the corner of the housing (36), on the perpendicular face (109) of the base (40).

## Patentansprüche

1. Basis (40) einer Bremsflüssigkeitsdrucksteuerungsvorrichtung (10) für ein Fahrzeug, wobei die Basis (40) einen darin gebildeten Bremsflüssigkeitsdurchlass (A1-E1, A2-E2) beinhaltet,
wobei in einer Fläche (111) ein Einsatzloch (42), in dem eine Bremsleitung (118) einzusetzen ist, gebildet ist, und
an mindestens einer von senkrechten Flächen (108, 109, 112, 114), die senkrecht zu der einen Fläche (111) sind, ein vorspringendes Teil (116) gebildet ist, um von der entsprechenden senkrechten Fläche (108, 109, 112, 114) nach außen vorzuspringen,
wobei ein Teil einer Montagepassungsoberfläche (43) für die Bremsleitung (118) an dem vorspringenden Teil (116) gebildet ist,
**dadurch gekennzeichnet, dass**
das vorspringende Teil (116) eine Flanschform oder eine Traufenform aufweist.

2. Bremsflüssigkeitsdrucksteuerungsvorrichtung (10) für ein Fahrzeug, das eine Basis (40) nach Anspruch 1 und ein an der Basis (40) montiertes Gehäuse (36) beinhaltet.

3. Bremsflüssigkeitsdrucksteuerungsvorrichtung (10) nach Anspruch 2, **dadurch gekennzeichnet, dass** die senkrechte Fläche, an der das vorspringende Teil (116) gebildet ist, eine Fläche (109) ist, wo das Gehäuse (36) montiert ist.

4. Bremsflüssigkeitsdrucksteuerungsvorrichtung (10) nach einem der Ansprüche 2 und 3, **dadurch gekennzeichnet, dass** die senkrechte Fläche, an der das vorspringende Teil (116) gebildet ist, eine Fläche (108) ist, wo ein Motor (29) montiert ist.

5. Bremsflüssigkeitsdrucksteuerungsvorrichtung (10) nach einem der Ansprüche 2 bis 4, **dadurch gekennzeichnet, dass** die senkrechte Fläche, an der das vorspringende Teil (116) gebildet ist, eine Fläche (112, 114) ist, wo ein Pumpenlagerungsloch (117) gebildet ist.

6. Bremsflüssigkeitsdrucksteuerungsvorrichtung (10) nach Anspruch 3, **dadurch gekennzeichnet, dass**
ein Basismontageteil des Gehäuses (36) in einer Form gebildet ist, die eine abgerundete Ecke aufweist, und
das vorspringende Teil (116) an einer Position entsprechend der Ecke des Gehäuses (36) an der senkrechten Fläche (109) der Basis (40) gebildet ist.

## Revendications

1. Base (40) d'un dispositif de commande de pression de liquide de frein (10) pour un véhicule, la base (40) incluant un passage de liquide de frein (A1-E1, A2-E2) formé dans celle-ci,
dans laquelle, dans une face (111), un trou d'insertion (42) dans lequel une ligne de frein (118) doit être insérée est formé, et
sur au moins l'une de faces perpendiculaires (108, 109, 112, 114) perpendiculaires à la une face (111), une partie saillante (116) est formée de manière à faire saillie vers l'extérieur depuis la face perpendiculaire correspondante (108, 109, 112, 114),
dans laquelle une partie d'une surface de siège de montage (43) pour la ligne de frein (118) est formée sur la partie saillante (116),
**caractérisée en ce que**
la partie saillante (116) présente une forme de bride ou une forme d'avant-toit.

2. Dispositif de commande de pression de liquide de frein (10) pour un véhicule, qui inclut une base (40) selon la revendication 1 et un boîtier (36) monté sur la base (40).

3. Dispositif de commande de pression de liquide de frein (10) selon la revendication 2, **caractérisé en ce que** la face perpendiculaire sur laquelle la partie saillante (116) est formée est une face (109) où le boîtier (36) est monté.

4. Dispositif de commande de pression de liquide de frein (10) selon l'une quelconque des revendications 2 et 3, **caractérisé en ce que** la face perpendiculaire sur laquelle la partie saillante (116) est formée est une face (108) où un moteur (29) est monté.

5. Dispositif de commande de pression de liquide de frein (10) selon l'une quelconque des revendications 2 à 4, **caractérisé en ce que** la face perpendiculaire sur laquelle la partie saillante (116) est formée est une face (112, 114) où un trou de stockage de pompe (117) est formé.

6. Dispositif de commande de pression de liquide de frein (10) selon la revendication 3, **caractérisé en ce qu'**
une partie de montage de base du boîtier (36) est formée dans une forme présentant un coin arrondi, et
la partie saillante (116) est formée au niveau d'une position correspondant au coin du boîtier (36), sur la face perpendiculaire (109) de la base (40).
